# EUROPEAN PATENT SPECIFICATION

(11) **EP 3 747 725 B1**
(45) Date of publication and mention of the grant of the patent: **23.07.2025**
(21) Application number: 20177058.3
(22) Date of filing: 28.05.2020
(51) Int. Cl.: B61H 7/06

(54) **LINEAR BRAKING SYSTEM FOR RAIL VEHICLES**
LINEARES BREMSSYSTEM FÜR SCHIENENFAHRZEUGE
SYSTÈME DE FREINAGE LINÉAIRE POUR VÉHICULES FERROVIAIRES

(30) Priority: 03.06.2019 US 201916430346
(43) Date of publication of application: 09.12.2020
(73) Proprietor: Klassen, Norm, Parkland County, Alberta T7Y 3M8 (CA)
(72) Inventor: Klassen, Norm, Parkland County, Alberta T7Y 3M8 (CA)
(74) Representative: FARAGO Patentanwälte GmbH

(56) References cited:
- WO-A1-2011/063492
- GB-A- 2 076 559
- US-A1- 2012 031 715

## Description

### FIELD OF THE INVENTION

The present specification relates generally to braking systems for rail vehicles and, more specifically, to a linear braking system for rail cars.

### BACKGROUND OF THE INVENTION

The following includes information that may be useful in understanding the present disclosure. It is not an admission that any of the information provided herein is prior art nor material to the presently described or claimed inventions, nor that any publication or document that is specifically or implicitly referenced is prior art.

An ongoing concern with the operation of railroad cars is the provision of comprehensive braking systems, including active braking systems and parking brake systems. Failure of the braking systems is the primary cause of most rail accidents, and can result in massive property damage and loss of life. Generally modern trains operate with a pressurized air braking system, which is vulnerable to failure when air pressure is lost, either rapidly or slowly, which prevents the brakes from being engaged. A particular risk is locomotive engine failure, as the locomotive engine commonly is used as the compressor system. To compensate, manual hand brakes are provided for application when the train is parked. However, setting of hand brakes must be done for each rail car, which is time consuming, difficult to track, and is still subject to risk, as often only a percentage of the hand brakes are set, based on the ratio of empty to loaded rail cars.

For example, the 2013 train derailment in Lac-Megantic, Quebec, Canada resulting in the deaths of nearly 50 people and the eventual destruction of the majority of the downtown of the city from the derailment and after-effects. One of the causes of the derailment was believed to be failure of the pressure in the air pressure system for the brakes, as well as having an insufficient number of hand brakes secured. In WO 2011/063492 A1, a rail brake including a rigid enclosure which mounts under a crane so as to dispose the base end of the enclosure over and adjacent a rail is disclosed. A top plate is mounted underneath the upper end of the enclosure. A spring carriage is mounted for vertical translation within the enclosure, beneath the top plate. Springs are mounted between the spring carriage and the top plate so that the springs are compressed when the spring carriage is elevated. A brake shoe is mounted under the carriage. Actuators are mounted between the spring carriage and the base end of the enclosure. Extension of the actuators compress the springs and elevate the brake shoe from the rail. Retraction allows the springs to drive the brake shoe against the rail. An opening in the enclosure allows replacement of the springs and actuators. Elevation of the brake shoe provides for its inspection and maintenance. In US 2006/131116 A1, a spring-type brake actuator for a pneumatically-operated vehicle brake is provided, with a brake actuator spring located on a front side of the actuator's intermediate flange, between a service brake actuator and a parking brake release actuator. The spring is captured between the intermediate flange and a retaining plate which is connected to the parking brake release actuator via a shaft through the intermediate flange. Moreover, GB 2 076 559 A discloses a vehicle having a governor- actuated braking system, a disc is releasably secured to an axially outer face of a wheel and normally drives a shaft which extends through a hub on which the wheel is mounted to transmit torque from the wheel to a governor via a gear train disposed at the axially inner end of the hub.

Accordingly, there remains a need for improvements in the art to partially or completely address the above-noted deficiencies.

### SUMMARY OF THE INVENTION

In accordance with an aspect of the invention, there is provided a to braking systems for rail vehicles and, more specifically, to a linear braking system for rail cars.

According to an embodiment of the invention, there is provided a linear brake assembly for a rail truck, comprising: a brake mechanism, the brake mechanism comprising at least one air brake, the air brake comprising at least a pressurized air chamber; a linear brake pad, the linear brake pad moveable between an extended position and a retracted position via operation of the brake mechanism, the extended position having the linear brake pad in contact with a rail and the retracted position having the linear brake pad not in contact with the rail; the linear brake pad defaulting to an extended position and moving to and from the retracted position via operation of the brake mechanism; wherein movement of the linear brake pad is performed via adjustment of air pressure within the pressurized air chamber of the air brake.

According to a further embodiment of the invention, there is provided a kit for a linear brake assembly for a rail truck, comprising: a brake mechanism, the brake mechanism comprising at least one air brake, the air brake comprising at least a pressurized air chamber; a linear brake pad, the linear brake pad moveable between an extended position and a retracted position via operation of the brake mechanism, the extended position having the linear brake pad in contact with a rail and the retracted position having the linear brake pad not in contact with the rail; the linear brake pad defaulting to an extended position and moving to and from the retracted position via operation of the brake mechanism; wherein movement of the linear brake pad is performed via adjustment of air pressure within the pressurized air chamber of the air brake; and one or more coupling mechanisms to secure the linear brake assembly to the rail truck.

According to a still further embodiment, there is provided a linear braking system for a rail car, comprising: a plurality of linear braking assemblies, each linear braking assembly comprising: a brake mechanism, the brake mechanism comprising at least one air brake, the air brake comprising at least a pressurized air chamber; a linear brake pad, the linear brake pad moveable between an extended position and a retracted position via operation of the brake mechanism, the extended position having the linear brake pad in contact with a rail and the retracted position having the linear brake pad not in contact with the rail; the linear brake pad defaulting to an extended position and moving to and from the retracted position via operation of the brake mechanism; wherein movement of the linear brake pad is performed via adjustment of air pressure within the pressurized air chamber of the air brake. wherein each rail truck on the rail car includes a pair of the linear braking assemblies.

For purposes of summarizing the invention, certain aspects, advantages, and novel features of the invention have been described herein. It is to be understood that not necessarily all such advantages may be achieved in accordance with any one particular embodiment of the invention. Thus, the invention may be embodied or carried out in a manner that achieves or optimizes one advantage or group of advantages as taught herein without necessarily achieving other advantages as may be taught or suggested herein. The features of the invention which are believed to be novel are particularly pointed out and distinctly claimed in the concluding portion of the specification. These and other features, aspects, and advantages of the present invention will become better understood with reference to the following drawings and detailed description.

Other aspects and features according to the present application will become apparent to those ordinarily skilled in the art upon review of the following description of embodiments of the invention in conjunction with the accompanying figures.

### BRIEF DESCRIPTION OF THE DRAWINGS

Reference will now be made to the accompanying drawings which show, by way of example only, embodiments of the invention, and how they may be carried into effect, and in which:
Figure 1 is a side schematic view of a rail car and rail trucks;
Figure 2 is a side schematic view of a rail truck;
Figure 3 is a side schematic view of a rail truck with a linear braking system attached according to an embodiment;
Figure 4 is a side schematic view of the rail truck of Figure 3 with the linear brake shoe retracted; and
Figure 5 is a schematic of the linear braking system according to an embodiment.

Like reference numerals indicated like or corresponding elements in the drawings.

### DETAILED DESCRIPTION OF THE EMBODIMENTS

The present invention relates to braking systems for rail vehicles and, more specifically, to a linear braking system for rail cars.

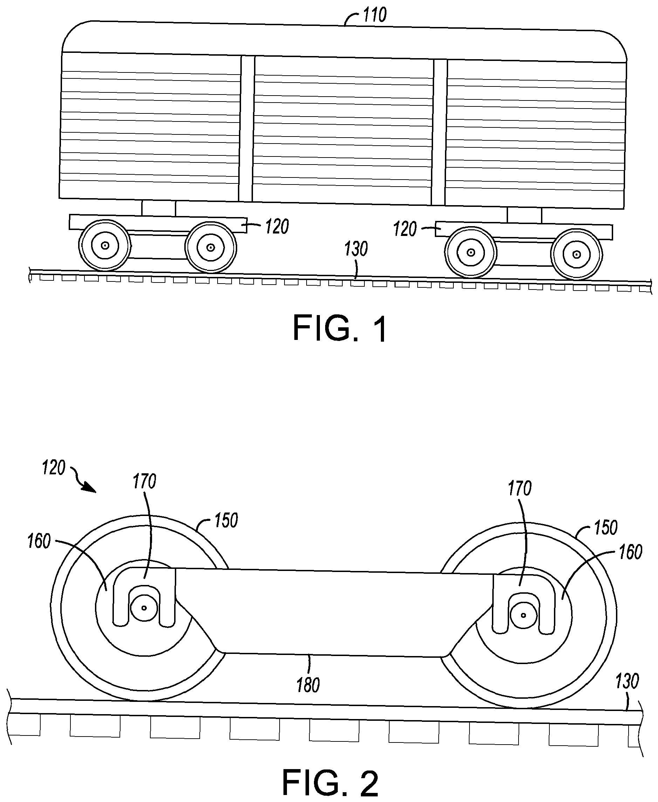

According to an embodiment as shown in Figure 1, a rail car 110 is carried on trucks 120 over rails 130 for travel. As shown in more detail in Figure 2, the trucks 120 comprise a set of wheels 150 with brake pads 160 and braking mechanism 170. In modern trains, braking mechanism 170 operates under air pressure, with the air pressure in the mechanism 170 increased to apply the brake pads 160 to the wheels 150. The body 180 of the truck may include a suspension mechanism (not shown), generally springs or air suspension, along with components for operating the braking mechanism 170, such as air hoses, valves and the like. Note the brake pads 160 are shown on the exterior of the wheels 150 for informative purposes, and brake pads 160 may be located on the interior of the wheels 150 in alternate designs.

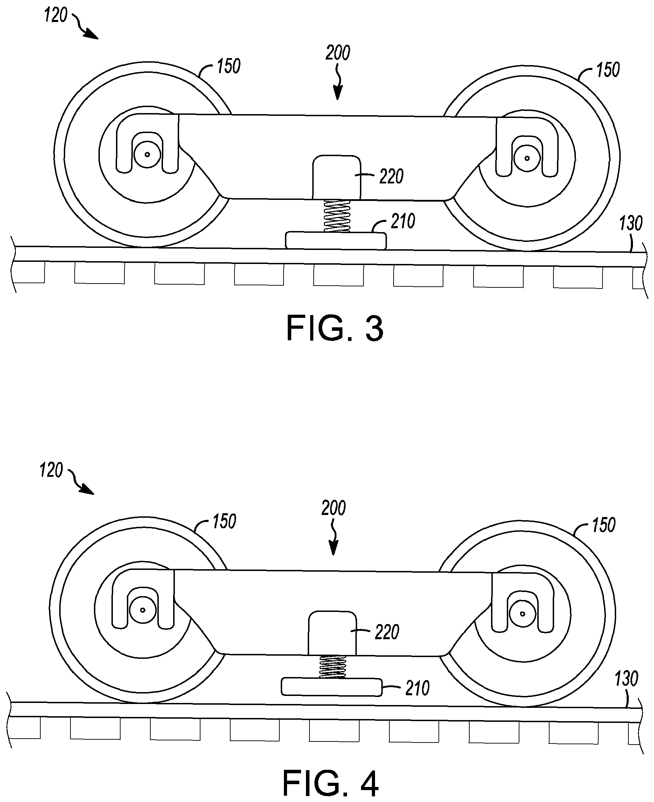

Referring now to Figures 3 and 4, a linear braking assembly 200 is attached to truck 120 over the existing body 180 to provide an additional braking option for the rail car 110. Linear braking assembly 200 may comprise a brake shoe 210 which extends to contact the rail 130 to brake or otherwise inhibit movement of the truck 120, and retracts off the rail 130 to permit movement. Extension and retraction are performed through the use of a spring brake 220, also known as an air brake, a maxi brake or a maxi pot.

The spring brake 220 is designed such the that default position, when there is no air pressure in the spring brake 220, is to extend the brake shoe 210 and engage the linear braking assembly 200. Brake shoe 210 is extended via a heavy-duty spring connected to the brake shoe 210, which forces the brake shoe 210 into contact with the rail 130. When air pressure is increased in the spring brake 220, the spring is compressed and the brake shoe 210 is retracted, disengaging from contact with the rail 130 and permitting movement of the truck 120 and rail car 110. Advantageously, if there is an air pressure failure while the brake shoe 210 is retracted, the spring decompresses and the brake shoe 210 is extended into contact with the rail 130, thereby providing a failsafe mechanism for the linear braking assembly 200. Accordingly, the risk of the truck 120 or rail car 110 moving unintentionally is effectively eliminated, avoiding a potential derailment or similar disaster.

Additionally, by having the linear brake shoe 210 engage in contact with the rail 130, as opposed to the wheel 150, risks of wear and wheel damage are mitigated, as any wear is applied to the brake shoe 210. Additionally, heat is dissipated by the rail 130, and fresh (unheated) sections of rail 130 are engaged as the truck 120 moves, thereby avoiding any warping of the wheel 150, as may be found with existing braking systems 170. Further, wear on the brake shoe 210 itself may be reduced, as the linear contact produces a more even heat distribution and wear pattern over the brake shoe 210.

As each rail car 110 runs on a pair of trucks 120, and each truck 120 has a pair of wheels 150 on either side, the rail car 110 typically requires four braking assemblies 200, two for each truck 120, mounted on each side between the wheels 150. This number may be adjusted to the size and structure of the truck as needed, although braking assemblies should be paired on opposite sides for balance.

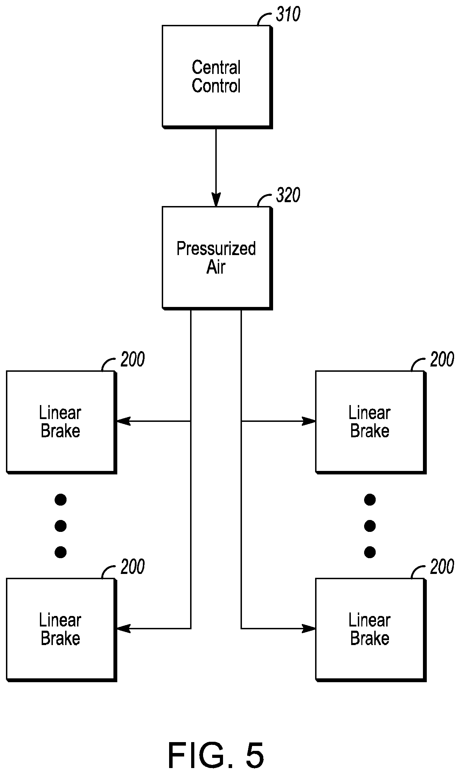

In operation, as shown in Figure 5, each linear braking assembly 200 is connected to a source of pressurized air 320, preferably using the same source as the pre-existing braking system on the rail car 110. Further, each linear braking assembly 200 is communicatively coupled to a central brake control mechanism 310, which permits disengagement and engagement of all linear braking assemblies simultaneously. Preferably, again, the central control mechanism 310 is provided near to or combined with existing controls for the pre-existing braking system.

Advantageously, use of a central brake control mechanism provides for verification that the linear braking system is engaged, as well as ensuring that any disengagement of the linear braking system must be performed intentionally.

An emergency release mechanism may also be provided to depressurize and engage the linear braking assembly 200 in the event of a system failure or other emergency situation that requires the linear braking assembly 200 to be engaged. The emergency release may be integrated into the spring brake 220 to permit engagement of a single linear brake assembly 200. Alternatively, or additionally, an emergency release mechanism may be provided on the rail car, which engages all linear brake assemblies 200 attached to all the trucks 120 on a given rail car.

The embodiments of the invention described herein are exemplary and numerous modifications, variations and rearrangements can be readily envisioned to achieve substantially equivalent results, all of which are intended to be embraced within the spirit and scope of the invention. Further, the purpose of the foregoing abstract is to enable the U.S. Patent and Trademark Office and the public generally, and especially the scientist, engineers and practitioners in the art who are not familiar with patent or legal terms or phraseology, to determine quickly from a cursory inspection the nature and essence of the technical disclosure of the application.

## Claims

1. Mechanism for reducing the risk of a truck (120) of a rail car (110) moving unintentionally, comprising:
A linear brake assembly (200), the linear brake assembly (200) comprising:
a brake mechanism, the brake mechanism comprising at least one air brake (220), the air brake (220) comprising at least a pressurized air chamber and a heavy duty spring;
a linear brake pad (160) coupled to the spring, the linear brake pad (160) moveable between an extended position and a retracted position via operation of the brake mechanism, the extended position having the linear brake pad (160) in contact with a rail (130) to produce the braking force and the retracted position having the linear brake pad (160) not in contact with the rail (130); the linear brake pad (160) defaulting to the extended position and moving to and from the retracted position via operation of the brake mechanism;
**characterized in**
**that** movement of the linear brake pad (160) is performed via adjustment of air pressure within the pressurized air chamber of the air brake (220), where a decrease in air pressure results the movement of the linear brake pad (160) to the extended position; and
**that** the linear brake assembly (200) further comprising a coupling mechanism to couple the linear brake assembly (200) to a rail truck body (180) wherein the coupling mechanism further comprises one or more connection assemblies to connect the linear brake assembly (200) to an existing brake assembly (200) on the rail truck (120), where present.

2. The linear brake assembly (200) of claim 1, wherein the brake mechanism (200) is comprised of two air brakes (220), each coupled to the linear brake pad (160).

3. The linear brake assembly (200) of claim 1, wherein the linear brake assembly (200) engages automatically as air pressure is lost.

4. A kit for a mechanism for reducing the risk of a truck (120) of a rail car (110) moving unintentionally, comprising:
A linear brake assembly (200), the linear brake assembly comprising:
a brake mechanism (200), the brake mechanism (200) comprising at least one air brake (220), the air brake (220) comprising at least a pressurized air chamber and a heavy duty; and
a linear brake pad (160) coupled to the heavy duty spring, the linear brake pad (160) moveable between an extended position and a retracted position via operation of the brake mechanism (200), the extended position having the linear brake pad (160) in contact with a rail (130) to produce the braking force and the retracted position having the linear brake pad (160) not in contact with the rail (130); the linear brake pad (160) defaulting to an extended position and moving to and from the retracted position via operation of the brake mechanism (200);
wherein movement of the linear brake pad (160) is performed via adjustment of air pressure within the pressurized air chamber of the air brake (220) where a decrease in air pressure results in the movement of the linear brake pad (160) to the extended position;
**characterized in**
**that** one or more coupling mechanisms to secure the linear brake assembly (200) to the rail truck (120) the coupling mechanism further comprising one or more connection assemblies to connect the linear brake assembly (200) to an existing brake assembly (200) on the rail truck (120), where present.

5. The kit of claim 4, wherein the brake mechanism (200) is comprised of two air brakes (220), each coupled to the linear brake pad (160).

6. The kit of claim 4, comprising a pair of linear brake assemblies (200) for coupling to a single rail truck (120).

7. The kit of claim 4, wherein the linear brake assembly (200) engages automatically as air pressure is lost.

8. System for reducing the risk of a truck (120) of a rail car (110) moving unintentionally, comprising:
a plurality of linear braking assemblies (200), each linear braking assembly (200) comprising:
a brake mechanism, the brake mechanism comprising at least one air brake (220), the air brake (220) comprising at least a pressurized air chamber and a heavy duty spring; and;
a linear brake pad (160), the linear brake pad (160) moveable between an extended position and a retracted position via operation of the brake mechanism, the extended position having the linear brake pad (160) in contact with a rail (130) to produce the braking force and the retracted position having the linear brake pad (160) not in contact with the rail (130); the linear brake pad (160) defaulting to the extended position and moving to and from the retracted position via operation of the brake mechanism (200);
wherein movement of the linear brake pad (160) is performed via adjustment of air pressure within the pressurized air chamber of the air brake (220) where a decrease in air pressure results in the movement of the linear brake pad (160) to the extended position,
**characterized in**
**that** each rail truck (120) on the rail car (110) includes at least a pair of the linear braking assemblies (200). that the linear brake assembly (200) further comprising a coupling mechanism to couple the linear brake assembly (200) to a rail truck body (180) wherein the coupling mechanism further comprises one or more connection assemblies to connect the linear brake assembly (200) to an existing brake assembly (200) on the rail truck (120), where present.

9. The system of claim 8, wherein the air brake (220) is comprised of two air pots, each coupled to the linear brake pad (160).

10. The system of claim 8, further comprising a plurality of coupling mechanisms to couple each linear brake assembly (200) to a rail truck body (180) wherein each coupling mechanism further comprises one or more connection assemblies to connect the linear brake assembly (200) to the rail truck (120).

11. The system of claim 8, wherein the linear brake assembly (200) engages automatically as air pressure is lost.

## Patentansprüche

1. Mechanismus zum Verringern des Risikos, dass sich ein Drehgestell (120) eines Eisenbahnwagens (110) ungewollt bewegt, umfassend:
eine Linearbremsbaugruppe (200), wobei die Linearbremsbaugruppe (200) umfasst:
einen Bremsmechanismus, wobei der Bremsmechanismus mindestens eine Druckluftbremse (220) umfasst, wobei die Druckluftbremse (220) mindestens eine Druckluftkammer und eine Schwerlastfeder umfasst;
einen Linearbremsklotz (160), der mit der Feder gekoppelt ist, wobei der Linearbremsklotz (160) über eine Betätigung des Bremsmechanismus zwischen einer herausgeschobenen Position und einer zurückgezogenen Position bewegbar ist, wobei der Linearbremsklotz (160) in der herausgeschobenen Position in Kontakt mit einer Schiene (130) steht, um die Bremskraft zu erzeugen, und der Linearbremsklotz (160) in der zurückgezogenen Position nicht in Kontakt mit der Schiene (130) steht; wobei der Linearbremsklotz (160) für eine Bewegung in die herausgeschobene Position voreingestellt ist und sich durch Betätigung des Bremsmechanismus in die zurückgezogene Position und aus der zurückgezogenen Position bewegt;
**dadurch gekennzeichnet,**
**dass** eine Bewegung des Linearbremsklotzes (160) über eine Justage des Luftdrucks innerhalb der Druckluftkammer der Druckluftbremse (220) durchgeführt wird, wobei eine Verringerung des Luftdrucks zu einer Bewegung des Linearbremsklotzes (160) in die herausgeschobene Position führt; und
**dass** die Linearbremsbaugruppe (200) des Weiteren einen Kopplungsmechanismus umfasst, um die Linearbremsbaugruppe (200) mit einem Drehgestellkörper (180) zu koppeln, wobei der Kopplungsmechanismus des Weiteren eine oder mehrere Verbindungsbaugruppen umfasst, um die Linearbremsbaugruppe (200) mit einer eventuell vorhandenen Bremsbaugruppe (200) an dem Drehgestell (120) zu verbinden.

2. Linearbremsbaugruppe (200) nach Anspruch 1, wobei der Bremsmechanismus (200) zwei Druckluftbremsen (220) umfasst, die jeweils mit dem Linearbremsklotz (160) gekoppelt sind.

3. Linearbremsbaugruppe (200) nach Anspruch 1, wobei die Linearbremsbaugruppe (200) automatisch aktiviert wird, wenn Luftdruck verloren geht.

4. Bausatz für einen Mechanismus zum Verringern des Risikos, dass sich ein Drehgestell (120) eines Eisenbahnwagens (110) ungewollt bewegt, umfassend:
eine Linearbremsbaugruppe (200), wobei die Linearbremsbaugruppe umfasst:
einen Bremsmechanismus (200), wobei der Bremsmechanismus (200) mindestens eine Druckluftbremse (220) umfasst, wobei die Druckluftbremse (220) mindestens eine Druckluftkammer und eine Schwerlastfeder umfasst; und
einen Linearbremsklotz (160), der mit der Schwerlastfeder gekoppelt ist, wobei der Linearbremsklotz (160) über eine Betätigung des Bremsmechanismus (200) zwischen einer herausgeschobenen Position und einer zurückgezogenen Position bewegbar ist, wobei der Linearbremsklotz (160) in der herausgeschobenen Position in Kontakt mit einer Schiene (130) steht, um die Bremskraft zu erzeugen, und der Linearbremsklotz (160) in der zurückgezogenen Position nicht in Kontakt mit der Schiene (130) steht; wobei der Linearbremsklotz (160) für eine Bewegung in eine herausgeschobene Position voreingestellt ist und sich durch Betätigung des Bremsmechanismus (200) in die zurückgezogene Position und aus der zurückgezogenen Position bewegt;
wobei eine Bewegung des Linearbremsklotzes (160) über eine Justage des Luftdrucks innerhalb der Druckluftkammer der Druckluftbremse (220) durchgeführt wird, wobei eine Verringerung des Luftdrucks zu einer Bewegung des Linearbremsklotzes (160) in die herausgeschobene Position führt;
**dadurch gekennzeichnet,**
**dass** ein oder mehrere Kopplungsmechanismen zum Befestigen der Linearbremsbaugruppe (200) an dem Drehgestell (120) bereitgestellt sind, wobei der Kopplungsmechanismus des Weiteren eine oder mehrere Verbindungsbaugruppen umfasst, um die Linearbremsbaugruppe (200) mit einer eventuell vorhandenen Bremsbaugruppe (200) an dem Drehgestell (120) zu verbinden.

5. Bausatz nach Anspruch 4, wobei der Bremsmechanismus (200) zwei Druckluftbremsen (220) umfasst, die jeweils mit dem Linearbremsklotz (160) gekoppelt sind.

6. Bausatz nach Anspruch 4, der ein Paar von Linearbremsbaugruppen (200) zum Koppeln mit einem einzelnen Drehgestell (120) umfasst.

7. Bausatz nach Anspruch 4, wobei die Linearbremsbaugruppe (200) automatisch aktiviert wird, wenn Luftdruck verloren geht.

8. System zum Verringern des Risikos, dass sich ein Drehgestell (120) eines Eisenbahnwagens (110) ungewollt bewegt, umfassend:
mehrere Linearbremsbaugruppen (200), wobei jede Linearbremsbaugruppe (200) umfasst:
einen Bremsmechanismus, wobei der Bremsmechanismus mindestens eine Druckluftbremse (220) umfasst, wobei die Druckluftbremse (220) mindestens eine Druckluftkammer und eine Schwerlastfeder umfasst; und
einen Linearbremsklotz (160), wobei der Linearbremsklotz (160) über eine Betätigung des Bremsmechanismus zwischen einer herausgeschobenen Position und einer zurückgezogenen Position bewegbar ist, wobei der Linearbremsklotz (160) in der herausgeschobenen Position in Kontakt mit einer Schiene (130) steht, um die Bremskraft zu erzeugen, und der Linearbremsklotz (160) in der zurückgezogenen Position nicht in Kontakt mit der Schiene (130) steht; wobei der Linearbremsklotz (160) für eine Bewegung in die herausgeschobene Position voreingestellt ist und sich durch Betätigung des Bremsmechanismus in die zurückgezogene Position und aus der zurückgezogenen Position (200) bewegt;
wobei eine Bewegung des Linearbremsklotzes (160) über eine Justage des Luftdrucks innerhalb der Druckluftkammer der Druckluftbremse (220) durchgeführt wird, wobei eine Verringerung des Luftdrucks zu einer Bewegung des Linearbremsklotzes (160) in die herausgeschobene Position führt,
**dadurch gekennzeichnet,**
**dass** jedes Drehgestell (120) an dem Eisenbahnwagen (110) mindestens ein Paar der Linearbremsbaugruppen (200) aufweist, dass die Linearbremsbaugruppe (200) des Weiteren einen Kopplungsmechanismus umfasst, um die Linearbremsbaugruppe (200) mit einem Drehgestellkörper (180) zu koppeln, wobei der Kopplungsmechanismus des Weiteren eine oder mehrere Verbindungsbaugruppen umfasst, um die Linearbremsbaugruppe (200) mit einer eventuell vorhandenen Bremsbaugruppe (200) an dem Drehgestell (120) zu verbinden.

9. System nach Anspruch 8, wobei die Druckluftbremse (220) zwei Druckluftaktuatoren umfasst, die jeweils mit dem Linearbremsklotz (160) gekoppelt sind.

10. System nach Anspruch 8, das des Weiteren mehrere Kopplungsmechanismen umfasst, um jede Linearbremsbaugruppe (200) mit einem Drehgestellkörper (180) zu koppeln, wobei jeder Kopplungsmechanismus des Weiteren eine oder mehrere Verbindungsbaugruppen umfasst, um die Linearbremsbaugruppe (200) mit dem Drehgestell (120) zu verbinden.

11. System nach Anspruch 8, wobei die Linearbremsbaugruppe (200) automatisch aktiviert wird, wenn Luftdruck verloren geht.

## Revendications

1. Mécanisme de réduction du risque de déplacement non intentionnel du bogie (120) d'un véhicule ferroviaire (110), comprenant :
un système de freinage linéaire (200), le système de freinage linéaire (200) comprenant :
un mécanisme de frein, le mécanisme de frein comprenant au moins un frein pneumatique (220), le frein pneumatique (220) comprenant au moins une chambre d'air sous pression et un ressort à haute résistance ;
un patin de frein linéaire (160) couplé au ressort, le patin de frein linéaire (160) étant mobile entre une position étendue et une position rétractée via l'actionnement du mécanisme de frein, la position étendue correspondant au patin de frein linéaire (160) en contact avec un rail (130) pour générer la force de freinage, et la position rétractée correspondant au patin de frein linéaire (160) qui ne se trouve pas en contact avec le rail (130) ; le patin de frein linéaire (160) se trouvant par défaut dans la position étendue et se déplaçant vers et depuis la position rétractée via l'actionnement du mécanisme de frein ;
**caractérisé**
**en ce que** le déplacement du patin de frein linéaire (160) est réalisé via un ajustement de la pression d'air au sein de la chambre d'air sous pression du frein pneumatique (220), où une diminution de la pression d'air génère le déplacement du patin de frein linéaire (160) dans la position étendue ; et
**en ce que** le système de freinage linéaire (200) comprend en outre un mécanisme de couplage permettant d'accoupler le système de freinage linéaire (200) à un corps de bogie ferroviaire (180), le mécanisme de couplage comprenant en outre un ou plusieurs systèmes de connexion permettant de connecter le système de freinage linéaire (200) à un système de freinage (200) existant sur le bogie (120), s'il est présent.

2. Système de freinage linéaire (200) de la revendication 1, dans lequel le mécanisme de frein (200) se compose de deux freins pneumatiques (220), chacun étant couplé au patin de frein linéaire (160).

3. Système de freinage linéaire (200) de la revendication 1, dans lequel le système de freinage linéaire (200) s'engage automatiquement en cas de perte de pression d'air.

4. Kit pour mécanisme de réduction du risque de déplacement non intentionnel du bogie (120) d'un véhicule ferroviaire (110), comprenant :
un système de freinage linéaire (200), le système de freinage linéaire comprenant :
un mécanisme de frein (200), le mécanisme de frein (200) comprenant au moins un frein pneumatique (220), le frein pneumatique (220) comprenant au moins une chambre d'air sous pression et un ressort à haute résistance ; et
un patin de frein linéaire (160) couplé au ressort à haute résistance, le patin de frein linéaire (160) étant mobile entre une position étendue et une position rétractée via l'actionnement du mécanisme de frein (200), la position étendue correspondant au patin de frein linéaire (160) en contact avec un rail (130) pour générer la force de freinage, et la position rétractée correspondant au patin de frein linéaire (160) qui ne se trouve pas en contact avec le rail (130) ; le patin de frein linéaire (160) se trouvant par défaut dans la position étendue et se déplaçant vers et depuis la position rétractée via l'actionnement du mécanisme de frein (200) ;
le déplacement du patin de frein linéaire (160) étant réalisé par le biais d'un ajustement de la pression d'air au sein de la chambre d'air sous pression du frein pneumatique (220), où une diminution de la pression d'air génère le déplacement du patin de frein linéaire (160) dans la position étendue ;
**caractérisé**
**en ce qu'**un ou plusieurs mécanismes de couplage permettent de sécuriser le système de freinage linéaire (200) au bogie (120), le mécanisme de couplage comprenant en outre un ou plusieurs systèmes de connexion permettant de connecter le système de freinage linéaire (200) à un système de freinage (200) existant sur le bogie (120), s'il est présent.

5. Kit de la revendication 4, dans lequel le mécanisme de frein (200) se compose de deux freins pneumatiques (220), chacun étant couplé au patin de frein linéaire (160).

6. Kit de la revendication 4, comprenant une paire de systèmes de freinage linéaire (200) permettant l'accouplement à un bogie unique (120).

7. Kit de la revendication 4, dans lequel le système de freinage linéaire (200) s'engage automatiquement en cas de perte de pression d'air.

8. Système de réduction du risque de déplacement non intentionnel du bogie (120) d'un véhicule ferroviaire (110), comprenant :
une pluralité de systèmes de freinage linéaire (200), chaque système de freinage linéaire (200) comprenant :
un mécanisme de frein, le mécanisme de frein comprenant au moins un frein pneumatique (220), le frein pneumatique (220) comprenant au moins une chambre d'air sous pression et un ressort à haute résistance ; et
un patin de frein linéaire (160), le patin de frein linéaire (160) étant mobile entre une position étendue et une position rétractée via l'actionnement du mécanisme de frein, la position étendue correspondant au patin de frein linéaire (160) en contact avec un rail (130) pour générer la force de freinage, et la position rétractée correspondant au patin de frein linéaire (160) qui ne se trouve pas en contact avec le rail (130) ; le patin de frein linéaire (160) se trouvant par défaut dans la position étendue et se déplaçant vers et depuis la position rétractée via l'actionnement du mécanisme de frein (200) ;
le déplacement du patin de frein linéaire (160) étant réalisé par le biais d'un ajustement de la pression d'air au sein de la chambre d'air sous pression du frein pneumatique (220), où une diminution de la pression d'air provoque le déplacement du patin de frein linéaire (160) dans la position étendue,
**caractérisé**
**en ce que** chaque bogie (120) du véhicule ferroviaire (110) inclut au moins une paire des systèmes de freinage linéaire (200), en ce que le système de freinage linéaire (200) comprend en outre un mécanisme de couplage permettant d'accoupler le système de freinage linéaire (200) à un corps de bogie ferroviaire (180), le mécanisme de couplage comprenant en outre un ou plusieurs systèmes de connexion permettant de connecter le système de freinage linéaire (200) à un système de freinage (200) existant sur le bogie (120), s'il est présent.

9. Système de la revendication 8, dans lequel le frein pneumatique (220) se compose de deux réservoirs d'air, chacun étant couplé au patin de frein linéaire (160).

10. Système de la revendication 8, comprenant en outre une pluralité de mécanismes de couplage permettant d'accoupler chaque système de freinage linéaire (200) à un corps de bogie ferroviaire (180), chaque mécanisme de couplage comprenant en outre un ou plusieurs systèmes de connexion permettant de connecter le système de freinage linéaire (200) au bogie (120).

11. Système de la revendication 8, dans lequel le système de freinage linéaire (200) s'engage automatiquement en cas de perte de pression.
